(19) Europäisches Patentamt

European Patent Office

Office européen des brevets

(11) **EP 1 281 679 A2**

(12) **EUROPEAN PATENT APPLICATION**

(43) Date of publication:
**05.02.2003 Bulletin 2003/06**

(51) Int Cl.⁷: **C03B 19/14**, C03B 19/01

(21) Application number: **02255379.6**

(22) Date of filing: **01.08.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **01.08.2001 US 920257**

(71) Applicant: **CORNING INCORPORATED
Corning, N.Y. 14831 (US)**

(72) Inventor: **The designation of the inventor has not
yet been filed**

(74) Representative: **Marchant, James Ian et al
Elkington and Fife,
Prospect House,
8 Pembroke Road
Sevenoaks, Kent TN13 1XR (GB)**

(54) **Method for making glass by plasma deposition using silica powder, silica powder and
photomask obtained by the method**

(57)     A method for manufacturing a photomask material includes delivering a powder containing silicon dioxide into a plasma to produce silica particles and depositing the silica particles on a deposition surface to form glass.

*FIGURE 2*

EP 1 281 679 A2

## Description

## Background of Invention

Field of the Invention

The invention relates generally to methods for making fused silica. More specifically, the invention relates to a method for making a pure and water-free fused silica and use of the fused silica as photomask material.

Background Art

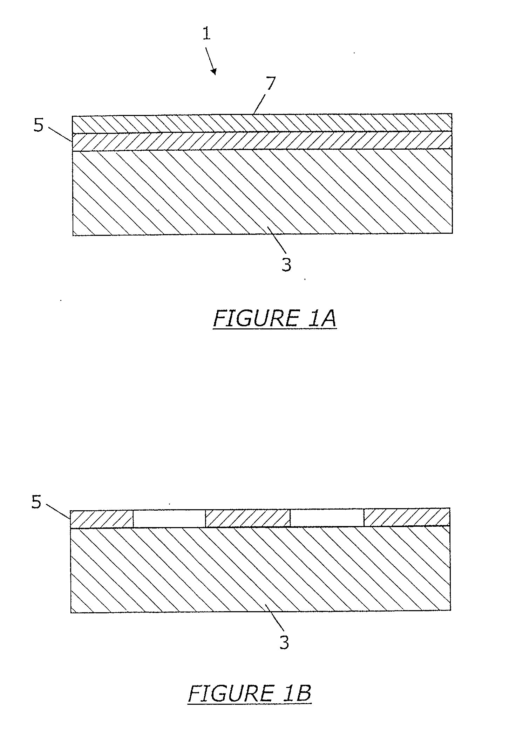

Photomasks are patterned substrates used in optical lithography processes for selectively exposing specific regions of a material to be patterned to radiation. Figure 1A shows a photomask blank **1** which includes a substrate **3** made of high-purity quartz or glass. The most common type of glass used is soda line. Quartz is more expensive than soda line and is typically reserved for critical photomask applications. The substrate **3** is usually coated with a thin uniform layer of chrome or iron oxide **5**. A chemical compound **7**, known as "photo-resist," is placed over the chrome or iron oxide layer **5**. Although not shown, an anti-reflective coating may also be applied over the chrome or iron oxide layer **5** before applying the photo-resist **7**. To form the photomask, a pattern is exposed onto the photo-resist **7** using techniques such as electron beam lithography. The pattern is then etched through the chrome or iron oxide layer **5**. Figure 1B shows a pattern etched in the chrome or iron oxide layer **5**.

For production of integrated circuits, the finished photomask contains high-precision images of integrated circuits. The integrated circuit images are optically transferred onto semiconductor wafers using suitable exposure beams. The resolution of the projected image is limited by the wavelength of the exposure beam. Currently, advanced microlithography tools use 248-nm radiation (KrF) laser or 193-nm radiation (ArF) laser to print patterns with line width as small as 0.25 μm. New microlithography tools using 157-nm ($F_2$) radiation are actively under development.

One of the primary challenges of developing 157-nm microlithography tools is finding suitable photomask material. Calcium fluoride is the main candidate for lens material at 157-nm but cannot be used for photomask because it has a high coefficient of thermal expansion. Other fluoride crystal materials that have large band gaps and transmit at 157 nm are $MgF_2$ and LiF. However, $MgF_2$ has a high birefringence, and the manufacturing and polishing of LiF is unknown. Fused silica is used in 248-nm and 193-nm microlithography lenses. However, the fused silica produced by current processes is not adequate for use at 157-nm because its transmission drops substantially at wavelengths below 185 nm. The drop in transmission has been attributed to the presence of residual water, *i.e.*, OH, $H_2$, and $H_2O$, in the

glass, where the residual water is due to the hydrogen-rich atmosphere in which the glass is produced.

High-purity fused silica is commonly produced by the boule process. The boule process involves passing a silica precursor into a flame of a burner to produce silica soot. The soot is then directed downwardly into a refractory cup, where it is immediately consolidated into a dense, transparent, bulk glass, commonly called a boule. This boule can be used as lens and photomask material at appropriate wavelengths. Because of environmental concerns, the silica precursor is typically a hydrogen-containing organic compound, such as octamethyltetrasiloxane (OMCTS) or silane, and the conversion flame is typically produced by burning a hydrogen-containing fuel, such as $CH_4$. Halogen-based silica precursors, particularly $SiCl_4$, are other types of silica precursors that can be used in the process. Flame combustion of $SiCl_4$ using a hydrogen-containing fuel produces toxic and environmentally-unfriendly gases such as HCl.

U.S. Patent Application Serial No._____ by Laura Ball and Sylvia Rakotoarison, *supra*, discloses a process for making a water-free fused silica by plasma induction. The process involves injecting a silica precursor and oxygen into a plasma. The silica precursor is oxidized in the plasma to form silica particles which are deposited on a deposition surface. The deposition surface is heated to consolidation temperatures so that the silica particles immediately consolidate into glass. To make a water-free silica glass, a hydrogen-free silica precursor is used, and the process takes place in a controlled atmosphere that is substantially free of water vapor. One suitable hydrogen-free silica precursor for the process is $SiCl_4$. However, oxidation of $SiCl_4$ produces chlorine gas, as shown by equation (1) below:

$$SiCl_4 (g) + O_2 (g) \rightarrow SiO_2 (s) + Cl_2 (g) \qquad (1)$$

If chlorine is captured in the silica glass, the transmission for the 157-nm wavelength is decreased. In order to increase transmission of the silica glass at 157 nm, a chlorine-free precursor is desired.

## Summary of Invention

In one embodiment, the invention relates to a method of making fused silica which comprises generating a plasma, delivering a powder containing silicon dioxide into the plasma to produce silica particles, and depositing the silica particles on a deposition surface to form glass.

In another embodiment, the invention relates to a method for manufacturing a photomask material which comprises delivering a powder comprising silicon dioxide into a plasma to produce silica particles and depositing the silica particles on a deposition surface to form glass.

In another embodiment, the invention relates to a feedstock for making fused silica by plasma induction which comprises silica powder.

In another embodiment, the invention relates to a feedstock for making fused silica by plasma induction which comprises quartz.

In another embodiment, the invention relates to a photomask for use at 157-nm including a silica glass made by a method comprising generating a plasma, delivering a powder containing silicon dioxide into the plasma to produce silica particles, and depositing the silica particles on a deposition surface to form glass.

Other features and advantages of the invention will be apparent from the following description and the appended claims.

**Brief Description of Drawings**

Figure 1A is a cross-section of a photomask blank.

Figure 1B is a cross-section of a photomask.

Figure 2 illustrates a system for producing fused silica by plasma induction using a chlorine-free precursor.

**Detailed Description**

Embodiments of the invention provide a method for making silica glass by plasma induction using a chlorine-free precursor. In a preferred embodiment, the chlorine-free precursor is dry silica or quartz powder. There are several sources of silica powder that can be used. The silica powder may be obtained, for example, by sol-gel synthesis, such as disclosed in European Patent A-0271281. The nominal grain size of the powder can range from 0.1 to 300 $\mu$m. Natural or synthetic quartz can be used. Because the plasma induction process is itself a purifying process, the purity of the silica can be variable. The following is a description of specific embodiments of the invention.

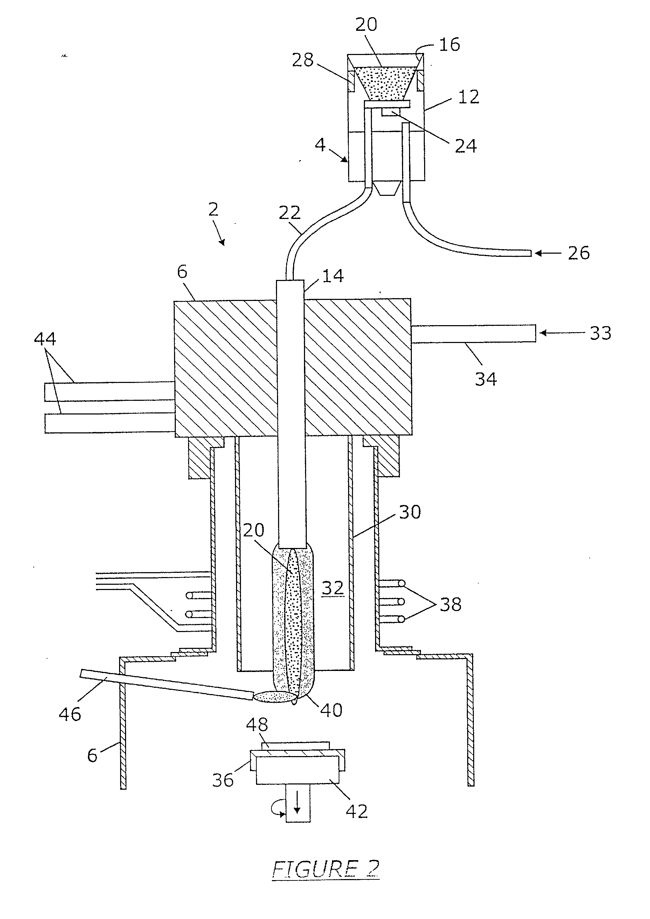

Figure 2 illustrates a system, generally designated by numeral **2**, for producing a chlorine-free silica glass by plasma induction. The system **2** comprises an induction plasma torch **6** mounted on a reactor **10**, *e.g.*, a water-cooled, stainless steel reactor, and an injection system **4** for injecting a silica precursor into the plasma torch **6**. The injection system **4** includes a distributor **12** and an injector **14**. The distributor **12** includes a container **16** which holds a dry chlorine-free silica (or quartz) powder **20**. The container **16** is connected to the injector **14** via a feed line **22**. The container **16** is mounted on a vibrator **24**, which controls the rate at which the silica powder **20** is supplied to the injector **14**. Gas flow **26** creates pressure in the distributor **12** which assists in transporting the powder **20** to the injector **14**. A heating ring **28** is provided to heat the container **16** and maintain the powder **20** in a dry condition.

The plasma torch **6** includes a reaction tube **30** inside which a plasma production zone **32** is located. The reaction tube **30** may be made of high-purity silica or quartz glass to avoid contaminating the silica particles being made with impurities. The plasma production zone **32** receives plasma-generating gases **33** from a plasma-generating gas feed duct **34**. Examples of plasma-generating gases **33** include argon, oxygen, air, and mixtures of these gases. The reaction tube **30** is surrounded by an induction coil **38**, which generates the induction current necessary to sustain plasma generation in the plasma production zone **32**. The induction coil **38** is connected to a high-frequency generator (not shown).

In operation, the plasma-generating gases **33** are introduced into the plasma production zone **32** from the feed duct **34**. The induction coil **38** generates high-frequency alternating magnetic field within the plasma production zone **32** which ionizes the plasma-generating gases to produce a plasma **40**. Water coolers **44** are used to cool the plasma torch **6** during the plasma generation.

The injector **14** projects the powder **20** into the plasma **40**. The powder **20** is converted to line silica particles in the plasma **40.** The silica particles are directed downwardly and deposited on a substrate **36** on a rotating table **42**. The substrate **36** is typically made of fused silica. In one embodiment, the plasma torch **6** heats the substrate **36** to consolidation temperatures, typically 1500 to 1800°F, so that the silica particles immediately consolidate into glass **48.** In other embodiments, the silica particles deposited on the substrate **36** may be consolidated into glass in a separate step.

The rotating table **42** is located within the reactor **10,** and the atmosphere in the reactor **10** is sealed from the surrounding atmosphere. The atmosphere in the reactor **10** is controlled such that it is substantially free of water, *e.g.*, the water vapor content in the atmosphere is less than 1 ppm by volume. This can be achieved, for example, by purging the reactor **10** with a dry and inert gas and using a desiccant, such as zeolite, to absorb moisture.

The glass **48** can be used as photomask material for microlithography applications or other applications requiring chlorine-free glass. In alternate embodiments, the silica glass may be doped with small amounts of other elements, such as F, B, Al, Ge, Sn, Ti, P, Se, Er, Na, K, Ca and S. In Figure 1, a dopant feed **46** is inserted through the wall of the reactor **10**. The dopant feed **46** can be used to supply the dopant materials toward or through the center of the plasma **40** at the same time that the injector **14** projects the powder **20** into the plasma **40**. Examples of dopant materials include, but are not limited to, fluorinated gases and compounds capable of being converted to an oxide of B, Al, Ge, Sn, Ti, P, Se, Er, or S. Examples of fluorinated gases include, but are not limited to, $CF_4$, $CF_6$, chlo-

rofluorocarbons, *e.g.*, $CF_xCl_{4-x}$, where x ranges from 1 to 3, $NF_3$, $SF_6$, $SiF_4$, $C_2F_6$, and $F_2$. In an alternate embodiment, a fluorine-doped silica glass can be made by doping the powder **20** with fluorine prior to injecting the powder **20** into the plasma **40**. This eliminates the use of toxic fluorinated gases in the plasma **40**.

The invention provides several advantages. The chlorine-free silica glass produced by the method of the invention can be used as a photomask material for microlithography applications, particularly 157-nm microlithography applications. The chlorme-free silica glass produced by the method of the invention can also be used in other applications that are sensitive to chlorine-levels in the glass. Other applications that are not sensitive to chlorine-levels in the glass can also benefit from the invention. Using a chlorine-free silica precursor eliminates production of chlorine gas. Further, the silica glass can be produced in one step, *i.e.*, deposition and consolidation into glass arc done at the same time. For fluorine-doped glass, use of toxic fluorine gases during deposition can be eliminated by using silica precursor that already contains fluorine. The plasma induction process itself is a purification process. Therefore, the purity of the silica powder used as the silica precursor can be variable. Alternatively, natural or synthetic quartz can be used as the silica precursor.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1.  A method of making fused silica, comprising:

    generating a plasma;
    delivering a powder containing silicon dioxide into the plasma to produce silica particles; and
    depositing the silica particles on a deposition surface to form glass.

2.  The method of claim **1,** wherein a nominal grain size of the powder ranges from 0.1 to 300 µm.

3.  The method of claim **1,** further comprising delivering a dopant material into the plasma to produce doped silica particles.

4.  The method of claim **3,** wherein the dopant material comprises a compound capable of being converted to an oxide of at least one member of the group consisting of B, Al, Ge, Sn, Ti, P, Se, Er, Na, K, Ca and S.

5.  The method of claim **3,** wherein the dopant material comprises a fluorine compound selected from the group consisting of $CF_4$, $CF_xCl_{4-x}$, where x ranges from 1 to 3, $NF_3$, $SF_6$, $SiF_4$, $C_2F_6$, and $F_2$.

6.  The method of claim **1,** wherein the powder further comprises a dopant material comprising fluorine.

7.  The method of claim **1**, wherein the powder is selected from the group consisting of silica, natural quartz and synthetic quartz.

8.  A method for manufacturing a photomask material, comprising:

    delivering a powder containing silicon dioxide into a plasma to produce silica particles; and
    depositing the silica particles on a deposition surface to form glass.

9.  A feedstock for making fused silica by plasma induction comprising silica powder.

10. The feedstock of claim **10,** wherein a nominal grain size of the powder ranges from 0.1 to 300 µm.

11. The feedstock of claim **10,** wherein the silicon-dioxide powder is doped with fluorine.

12. A photomask for use at 157-nm including a silica glass made by a method comprising:

    generating a plasma;
    delivering a powder containing silicon dioxide into the plasma to produce silica particles; and
    depositing the silica particles on a deposition surface to form glass.

1

7

5

3

*FIGURE 1A*

5

3

*FIGURE 1B*

*FIGURE 2*